# EUROPÄISCHE PATENTANMELDUNG

(11) **EP 1 479 598 A2**
(43) Veröffentlichungstag der Anmeldung: **24.11.2004**
(21) Anmeldenummer: 03018356.0
(22) Anmeldetag: 13.08.2003
(51) Int. Cl.: B62H 3/00, B62H 3/04

(54) **Mehrstöckige Einstellanlage für leichte Zweiräder**

(30) Priorität: 23.05.2003 DE 20308087 U
(71) Anmelder: JOSTA Technik GmbH, 40477 Düsseldorf (DE)
(72) Erfinder: Blume, Ernst, 40477 Düsseldorf (DE)
(74) Vertreter: Habbel, Ludwig (Lutz), Dipl.-Ing.

(57) **Zusammenfassung**

Die Erfindung betrifft eineEinstellanlage für leichte Zweiräderwie Fahrräder, Motorroller oder Mopeds,
mit einer benutzerfernen Rückseite sowie einer dem Benutzer zugewandten Vorderseite,
mit einem Rahmen, an welchem in wenigstens zwei Etagen übereinander angeordnete Aufnahmen für die Zweiräder festgelegt sind,
wobei höher angeordnete Aufnahmen in einer Führung beweglich geführt und gegen die Wirkung einer Rückstellfeder absenkbar sind,
und mit einer von der Vorderseite aus lösbaren, ersten Verriegelung, welche in ihrer Riegelstellung die abgesenkte obere Aufnahme gegen die Federwirkung in ihrer abgesenkten Stellung hält,
wobei diese erste Verriegelung einen schiebebeweglich gelagerten Riegelbolzen aufweist, welcher aus einer Riegelstellung gegen die Wirkung einer Riegelfeder in eine Freigabestellung verschiebbar ist,
wobei der Riegelbolzen schräg zur Längsachse der oberen Aufnahme ausgerichtet ist und sich bei abgesenkter Aufnahme zur Führung (Ausleger 5) erstreckt,
und in seiner Riegelstellung mit einem Riegelanschlag der Führung zusammenwirkt,
und daß eine zweite Verriegelung in Form einer sogenannten Riegelzange zur Festlegung eines Zweirades in einer Aufnahme vorgesehen ist,
wobei die Riegelzange zwei Riegel aufweist, welche zwischen einer ein Laufrad des Zweirades freigebenden Freigabestellung und einer das Laufrad in der Aufnahme festlegenden Riegelstellung beweglich sind, in welcher sie die Felge des Laufrades in ihrer Riegelstellung hintergreifen.

## Beschreibung

Die Erfindung betrifft eine Einstellanlage nach dem Oberbegriff des Anspruches 1. Lediglich aus Gründen der Einfachheit wird nachfolgend - stellvertretend für leichte Zweiräder - stets von Fahrrädern gesprochen, wobei als leichte Zweiräder - im Gegensatz zu den schwereren Motorrädern -jedoch nicht nur Fahrräder, sondern auch motorisierte Zweiräder wie Mofas, Mopeds oder Motorroller in die Einstellanlage eingestellt werden können, insbesondere wenn die Aufnahmen der Einstellanlage eine für die jeweilige Reifenbreite ausreichende Breite aufweisen.

Aus der DE-U-200 05 133 ist eine gattungsgemäße Einstellanlage bekannt.

Der Erfindung liegt die Aufgabe zugrunde, eine gattungsgemäße Einstellanlage dahingehend zu verbessern, dass diese eine zuverlässig sichernde Halterung des Zweirades in der Aufnahme insbesondere während des Be- und Entladens ermöglicht.

Diese der Erfindung zugrundeliegende Aufgabe wird durch eine Einstellanlage mit den Merkmalen des Anspruchs 1 gelöst.

Die Erfindung schlägt mit anderen Worten vor, eine erste Verriegelung durch einen verschiebbaren Riegelbolzen im Sinne eines "Federfallenschlosses" zu bewirken, wenn sich die Aufnahme in ihrer abgesenkten Stellung befindet. Auf diese Weise wird die Aufnahme zuverlässig in ihrer abgesenkten Stellung gehalten, und gegenüber einer filigranen, mehrarmigen Ausgestaltung eines Verriegelungsmechanismus wird eine einfache, preisgünstige und kompakte, wenig Bauraum beanspruchende Konstruktion ermöglicht, die eine zuverlässige Verriegelung ermöglicht sowie eine einfache Lösbarkeit des Riegels zur Entriegelung. Eine zweite Verriegelung in Form einer sogenannten Riegelzange legt das Laufrad des Zweirades in der Aufnahme fest. Da die Aufnahmen in jeder von mehreren Etagen der Einstellanlage beweglich sein können, z. B. längsbeweglich verschiebbar, oder schwenkbar, oder absenkbar, ermöglicht diese zweite Verriegelung einen sicheren Halt des Fahrzeugs in der Aufnahme, insbesondere auch wenn es gemeinsam mit dieser bewegt wird. Dieser sichere Halt dient nicht nur dem Unfallschutz für den Benutzer oder dem Beschädigungsschutz für das Fahrzeug oder die Einstellanlage, sondern kann auch als Diebstahlschutz genutzt werden, wenn z.B. eine von Unbefugten nicht zu öffnende Verriegelung verwendet wird, wobei ein derartiger Diebstahlschutz auch bei Aufnahmen vorteilhaft ist, welche nicht wie oben beschrieben beweglich sind.

In einfacher baulicher Ausgestaltung kann der Riegelbolzen der ersten Verriegelung in einem Führungsrohr beweglich gelagert sein. Das Führungsrohr stellt sicher, dass der Riegelbolzen gegen seitliche Auslenkungen und damit eine unbeabsichtigte Entriegelung gut geschützt geführt ist.

Vorteilhaft kann der Riegelanschlag, gegen welchen der Riegelbolzen in seiner Riegelstellung anliegt, durch eine einfache Ausnehmung in der Führung geschaffen sein, in welcher die Aufnahme geführt ist. Ohne die Herstellung und Montage zusätzlicher Verriegelungselemente kann daher durch diese einfache Schaffung einer Ausnehmung ein zuverlässiger Anschlag für den Riegelbolzen geschaffen werden.

Eine gute Zugänglichkeit zur Betätigung des Riegelbolzens kann durch eine Fernentriegelung vorgesehen sein. In besonders preisgünstiger und funktionssicherer Ausgestaltung können hierzu handelsübliche Großserienelemente verwendet werden, beispielsweise ein Bowdenzug, welcher seinerseits mittels eines Handhebels bedienbar ist.

Vorteilhaft kann eine optimale Ausnutzung einer vorhandenen Grundfläche dadurch bewirkt werden, dass zu Gunsten eines Parkraums für eine möglichst große Anzahl von Fahrrädern die Einstellanlage mehrere Etagen übereinander aufweist. Um die Fahrräder aus oberen Etagen einfach einstellen und wieder aus der Einstellanlage entnehmen zu können, können die oberen Aufnahmen vorzugsweise teleskopierbar sein, sodass sie schräg nach unten weisend nahe bis an den Boden geführt werden können und dementsprechend gut zugänglich sind, um ein Fahrrad in die Aufnahme einzustellen oder aus der Aufnahme zu entnehmen.

Auf diese Weise können beispielsweise drei Aufnahmen übereinander angeordnet sein, sodass eine dreistöckige Einstellanlage geschaffen werden kann.

In den Fällen von höheren Einstellanlagen, wie der vorgenannten dreistöckigen Einstellanlage, können die obersten Aufnahmen alternativ zu einer Befestigung an einem Rahmen, welcher sich am Boden oder an der Wand abstützt, hängend ausgestaltet sein. Die Befstigung der Aufnahmen kann an einer bereits vorhandenen Raumdecke vorgesehen sein oder an einem zweiten Rahmen, beispielsweise einer Gerüstkonstruktion. Je nach baulichen Gegebenheiten kann die Schaffung noch weiterer Etagen vorgesehen sein, so daß vieretagige oder noch höhere Einstellanlagen geschaffen werden können.

Alternativ zu einer schienenartigen, teleskopierbaren Ausgestaltung dieser obersten, hängend angeordneten und als Hängeaufnahmen bezeichneten Aufnahmen können diese an ihrer Aufhängung abgesenkt werden, sodass sie am Boden mit den Fahrrädern bestückt werden können bzw. am Boden die Entnahme der Fahrräder ermöglichen.

Vorzugsweise können die obersten, an der Decke gelagerten Aufnahmen verschiebbar an der Decke angeordnet sein, beispielsweise mit entsprechenden Schlitten an der Decke geführt sein, sodass die Hängeaufnahmen zwischen einer Lagerstelle und einer Be- und Entladestelle an der Decke verfahren werden können, wobei unter der Be- und Entladestelle am Boden die Beschickung bzw. Entladung vorgenommen werden kann, während die Lagerstelle davon weiter entfernt sein kann, beispielsweise genau über den Etagen mit den anderen abgestellten Fahrrädern. Auf diese Weise ist sichergestellt, dass beispielsweise Laufzonen innerhalb einer Einstellanlage verbleiben, die einerseits zum Be- und Entladen genutzt werden können und an denen andererseits sichergestellt ist, dass von der Decke keine Feuchtigkeit oder Schmutz herabtropft, beispielsweise von Fahrrädern, die dort oben oberhalb der Laufzonen in ihren Hängeaufnahmen angeordnet sind.

Die Riegelzange, welche das Laufrad des Zweirades in der Aufnahme festlegt, kann in sämtlichen schienenartigen Aufnahmen verwendet werden, in welche das Zweirad jeweils eingeschoben bzw. aufgeschoben wird. Auf der untersten Ebene, wo eine Festlegung des Zweirades in der Aufnahme möglicherweise aus Handhabungs- oder Sicherheitsüberlegungen nicht erforderlich ist, kann diese Verriegelung dennoch vorgesehen sein, entweder um eine zusätzliche Sicherheit zu schaffen, dass die Zweiräder zuverlässig in den Aufnahmen gehalten werden oder um beispielsweise einen Diebstahlschutz zu schaffen und das Entfernen der Fahrräder durch unbefugte Personen zu verhindern. Derart unbefugte Personen können entweder Dritte sein, oder aber auch der Fahrradbesitzer selbst, wenn beispielsweise eine automatisierte Verwaltung der Einstellanlage vorgesehen ist, verbunden mit der Entrichtung eines Park-Entgeltes. In diesem Fall kann vorgesehen sein, dass die Riegelzange erst nach Entrichtung dieses Entgeltes geöffnet werden kann.

Bei einer derartigen automatisierten Verwaltung der Einstellanlage kann zudem die Stellung der Riegelzange sensorisch erfasst werden, so dass eine Information über die Anzahl belegter und freier Stellplätze erhältlich ist und beispielsweise an einem Benutzerterminal angezeigt werden kann. Insbesondere können dem Benutzer zielgerichtet die jeweils freien Stellplätze zur Verfügung gestellt werden.

Die Riegelzange kann grundsätzlich mechanisch selbstverriegelnd ausgestaltet sein, so dass die Riegelzange automatisch aus ihrer Freigabestellung in die Riegelstellung verschwenkt wird, wenn ein Fahrrades in die Aufnahme eingeschoben wird. Hierzu kann die Riegelzange einen Anschlag aufweisen, gegen den das Laufrad des Zweirades beim Einschieben in die Aufnahme gerät, wobei der Riegel der Riegelzange gemeinsam mit dem Anschlag bewegt wird, und zwar in seine Riegelstellung bewegt wird, wenn das Laufrad gegenüber dem Anschlag weiterbewegt wird und den Anschlag auf diese Weise bewegt.

Eine preisgünstige und funktionssichere Ausgestaltung der Riegelzange kann insbesondere dadurch bewirkt werden, dass Anschlag und Riegel der Riegelzange als einstückiges Bauteil ausgebildet sind. Auf diese Weise werden Montagekosten verringert und es ist sichergestellt, dass bei einer Bewegung des Anschlages der Riegel automatisch ebenfalls bewegt wird.

Eine besonders kraftsparende Betätigung der mechanisch selbstverriegelnden Riegelzange kann dadurch bewirkt werden, dass das Fahrrad mit seiner Gewichtskraft den Anschlag bewegt. Hierzu kann vorgesehen sein, dass sich der Anschlag unterhalb des Laufrades befindet, so dass beim Einschieben des Fahrrades in die Aufnahme das Laufrad auf den Anschlag gerät und diesen Anschlag durch das Eigengewicht des Fahrrades herunterdrückt, so dass hierdurch die Riegelzange in ihre Riegelstellung bewegt wird. Hierzu kann insbesondere vorgesehen sein, in der Aufnahme eine Ausnehmung vorzusehen, in welche das Laufrad eintaucht, so dass dem Anschlag ein großer Verstellweg ermöglicht wird, nämlich von einer Stellung oberhalb der Ausnehmung, durch die Ausnehmung hindurchgeführt, bis in eine Stellung unterhalb der Ausnehmung.

Es kann einer Riegelzange ein Sperrelement zugeordnet sein, welches die Riegelzange in ihrer Riegelstellung arretiert. Insbesondere bei einer automatisierten Verwaltung der Einstellanlage kann vorgesehen sein, dass diese Sperrelemente fernbetätigt bedient werden, beispielsweise nach Entrichtung eines Entgeltes gelöst werden, so dass nach Bezahlung der Einstellgebühr der Benutzer sein Fahrrad aus der Einstellanlage entnehmen kann und hierzu die Riegelzange öffnen kann.

In den Zeichnungen sind rein schematisch Ausführungsbeispiele erfindungsgemäßer Einstellanlagen dargestellt. Dabei zeigt
- Fig. 1: eine perspektivische, teilweise weggebrochene Ansicht auf die Vorderseite einer zweistöckigen Einstellanlage,
- Fig. 2: ausschnittsweise eine Ansicht auf die Rückseite einer Aufnahme mit einem Riegelbolzen,
- Fig. 3 und 4: perspektivische, stark vereinfachte Darstellungen jeweils einer drei- und einer vierstöckigen Einstellanlage,

- Fig. 5: ein Bauteil als Teil einer Riegelzange, und die
- Fig. 6: eine in einer Aufnahme montierte Riegelzange.

In den Zeichnungen ist mit 1 ein Rahmen bezeichnet, der aus vertikalen Stützen 2 und einem Horizontalträger 3 gebildet ist, wobei an den Stützen 2 zusätzliche, schräg verlaufende Stützstreben 4 vorgesehen sind, die sich bis zum Boden erstrecken. Horizontale Ausleger 5 erstrecken sich von dem Horizontalträger 3 aus zur Vorderseite der Einstellanlage.

Die Stützen 2 und die Stützstreben 4 sind im rückseitigen Bereich der Einstellanlage angeordnet, wobei als Vorderseite die dem Benutzer zugewandte Seite bezeichnet ist. Die Stützen 2 und die Stützstreben 4 können mit dem Boden verschraubt oder in den Boden eingelassen sein, um dem Rahmen 1 eine hohe Standfestigkeit zu verleihen und vordere vertikale Stützen überflüssig zu machen, die den Zugang zu den Fahrrädern erschweren könnten.

Die Einstellanlage weist untere Aufnahmen 6 für Fahrräder auf und ähnlich ausgestaltete obere Aufnahmen 7. Für die oberen Aufnahmen 7 dienen die oberen Ausleger 5 als Führungen, wobei die Bewegung der oberen Aufnahmen 7 weiter unten näher erläutert wird. Die Aufnahmen 6 und 7 sind jeweils etwa als U-förmige Schienen ausgebildet, die zur Führung der Laufräder eines Fahrrades dienen. Sowohl die unteren Aufnahmen 6 als auch die oberen Ausleger 5 mit den oberen Aufnahmen 7 sind jeweils abwechselnd nebeneinander höhenversetzt angeordnet, um eine möglichst nahe benachbarte Anordnung von Fahrrädern zu ermöglichen und dabei Kollisionen zwischen deren Lenkstangen zu vermeiden.

Die zur Rückseite der Einstellanlage gerichteten Enden der Aufnahmen 6 und 7 weisen jeweils Bügel 8 auf, die das Vorderrad eines in die jeweilige Aufnahme eingestellten Fahrrades umgeben und so das Fahrrad gegen seitliches Kippen sichern und auch dagegen, dass das Fahrrad über das rückseitige Ende der jeweiligen Aufnahme hinaus zu weit in die Aufnahme 6 bzw. 7 eingeschoben werden kann. Die Bügel 8 können vorteilhaft so weit seitlich oder nach oben um das Vorderrad herumgezogen sein, dass sie das Umschließen des Fahrradrahmens und des Bügels 8 mit einem handelsüblichen Ringschloss ermöglichen, um eine gute Diebstahlsicherung für das Fahrrad zu gewährleisten.

Die oberen Aufnahmen 7 sind beweglich angeordnet. Vollständig aus dem Ausleger 5 herausgezogen nehmen sie eine nach unten gerichtete Schrägstellung ein, die bei dem dargestellten Ausführungsbeispiel einen verbleibenden Freiraum von rein beispielhaft etwa 40 cm zwischen dem Boden und dem vorderseitigen, unteren Ende der Aufnahme 7 bewirkt. Ein Handgriff 30 erleichtert die Handhabung der Aufnahme 7.

Bei flacherer oder nach oben angestellter Ausrichtung des Handgriffs 30 kann abweichend von dem dargestellten Ausführungsbeispiel vorgesehen sein, die Aufnahme 7 bis auf den Boden absenken zu können, um z. B. das Fahrrad leichter in die Aufnahme 7 einstellen zu können.

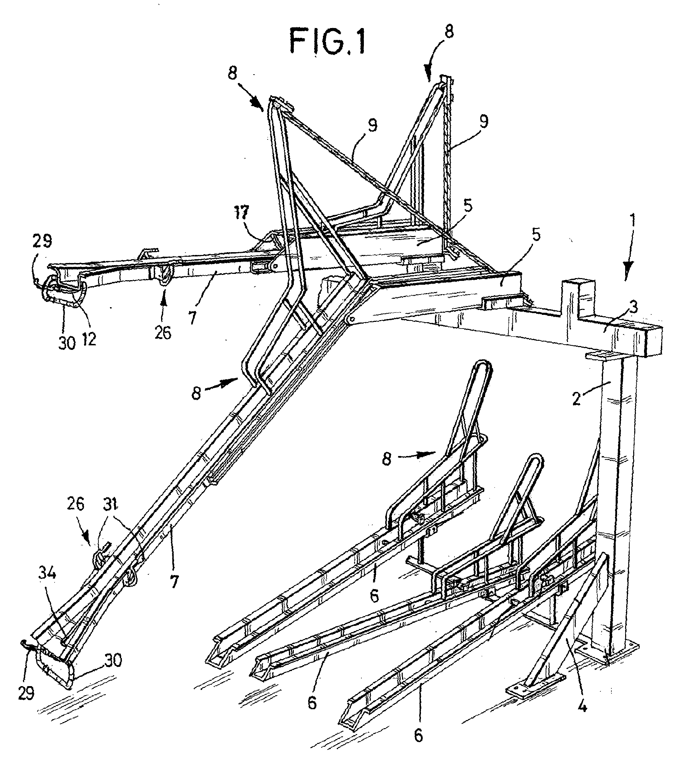

Die in Fig. 1 weiter links dargestellte obere Aufnahme 7 befindet sich in ihrer Ruhe- oder Lagerstellung, in der sie vollständig in den Ausleger 5 eingeschoben ist. Dabei verläuft ein Federelement 9 von dem Horizontalträger 3 des Rahmens 1 zum Bügel 8. Dieses Federelement 9 ist als elastischer Seilzug ausgestaltet, wobei dieser je nach gewünschter Zugkraft mehrsträngig ausgestaltet sein kann.

Abweichend von dem dargestellten Ausführungsbeispiel können andere Federelemente vorgesehen sein, welche eine Rückstellkraft aufbringen und das Anheben der Aufnahme 7 aus der abgesenkten Be- und Entladeposition in ihre angehobene Lagerstellung unterstützen. Dies kann z. B. eine Wendel-Zugfeder an Stelle des elastischen Seilzugs sein, oder ein Federelement, welches als Zugfeder liegend in dem Ausleger 5 angeordnet ist, oder eine Blattfeder, welche an dem Ausleger 5 befestigt ist und die Aufnahme 7 von unten unterstützt.

In der beschriebenen Lagerstellung der Aufnahme 7 ist das Federelement 9 entspannt oder minimal gespannt. Wird demgegenüber die obere Aufnahme 7 aus dem Ausleger 5 herausgezogen und anschließend abgesenkt, bis in die weiter rechts in Fig. 1 dargestellte Be- und Entladestellung, so wird dabei das Federelement 9 gespannt. Hierdurch ändert sich der Angriffswinkel, mit dem das Federelement 9 am Ausleger 5 angreift.

In der abgesenkten Stellung der Aufnahme 7 weist das Federelement 9 eine derartige Vorspannung auf, dass es nicht nur die Gewichtskraft der Aufnahme 7 kompensiert, sondern auch einen Teil des Fahrradgewichtes kompensiert, so dass mit einem minimalen Kraftaufwand die mit einem Fahrrad beladene Aufnahme 7 aus ihrer Be- und Entladestellung angehoben werden kann. Auch das anschließende Einschieben der Aufnahme 7 in den Ausleger 5, bis sich die Aufnahme 7 in ihrer Lagerstellung befindet, wird durch den Federzug unterstützt.

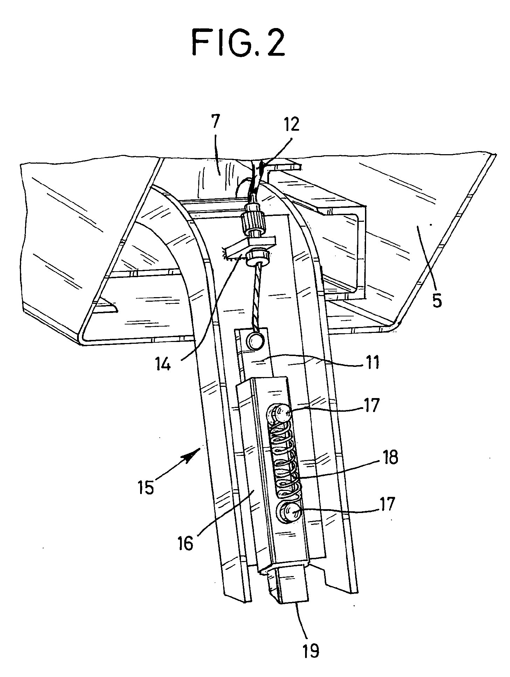

Um eine selbsttätige Bewegung der Aufnahme 7 zu vermeiden, ist eine anhand von Fig. 2 näher erläuterte Verriegelung 10 vorgesehen. Diese Verriegelung 10 weist einen schiebebeweglichen Riegelbolzen 11 auf, welcher am rückwärtigen Ende der Aufnahme 7 verschiebbar gelagert ist. Von dem Riegelbolzen 11 erstreckt sich der Innenzug eines Bowdenzugs 12 nach oben, wobei die Hülle dieses Bowdenzugs 12 an einem Widerlager 14 abgestützt ist. Der Bowdenzug 12 ist, wie auch aus Fig. 1 ersichtlich, bis zu einem Handhebel 29 geführt und mittels dieses Handhebels 29 bedienbar. Der Handhebel 29 ist für den Benutzer gut zugänglich am Handgriff 30 befestigt. Besonders preiswert können als Bowdenzug 12 und Handhebel 29 handelsübliche Bauteile aus z. B. der Fahrradtechnik verwendet werden, wie sie dort z. B. für Bremsanlagen verwendet werden.

In Fig. 2 ist das rückwärtige Ende einer Aufnahme 7 dargestellt, die vollständig in ihren zugehörigen Ausleger 5 eingeschoben ist. Am rückwärtigen Ende der Aufnahme 7 ist ein Fortsatz 15 vorgesehen, der U-förmig profiliert ist und in seinem Inneren ein Führungsrohr 16 für den Riegelbolzen 11 aufnimmt.

Sowohl am Riegelbolzen 11 als auch am Führungsrohr 16 ist jeweils ein Anlenkpunkt 17 vorgesehen, wobei zwischen diesen beiden Anlenkpunkten 17 eine Zugfeder 18 vorgesehen ist, die mit ihren beiden Enden an den beiden Anlenkpunkten 17 festgelegt ist. Durch den Innenzug des Bowdenzugs 12 kann der Riegelbolzen 11 gegen die Wirkung der Zugfeder 8 in seiner aus Fig. 2 ersichtliche Freigabestellung bewegt werden, wobei nach Entlastung des Handhebels bzw. des Bowdenzugs 12 die Zugfeder 18 den Riegelbolzen 11 automatisch in eine Riegelstellung führt, in welcher ein freies Ende 19 des Riegelbolzens 11 weiter über das Ende des Fortsatzes 15 hinausragt als in der aus Fig. 2 ersichtlichen Stellung.

Der Fortsatz 15 kann materialeinheitlich und einteilig durch die Aufnahme 7 gebildet sein. In diesem Fall ist im Inneren des Auslegers 5 eine Führung für die Aufnahme 7 vorzusehen, welche bei der Bewegung der Aufnahme 7 nach vorn ein Anheben des hinteren Endes der Aufnahme 7 bewirkt, sodass der Fortsatz 15 in den Ausleger 5 hineingehoben wird.

Alternativ kann vorgesehen sein, den Fortsatz 15 federbelastet in seiner Stellung zu halten, welche aus Fig. 2 ersichtlich ist und in welcher er gegenüber der Längsachse der Aufnahme 7 nach unten abgewinkelt ist. Wenn die Aufnahme 7 nach vorn aus dem Ausleger 5 herausgezogen wird, so wird der Fortsatz 15 gegen das hintere Ende des Auslegers 5 anschlagen und gegen die Federwirkung beispielsweise einer Spiral- oder Wickelfeder angehoben werden. Wenn die Aufnahme so weit wie möglich nach vorn gezogen worden ist und dann nach unten abgesenkt wird, in ihre in Fig. 1 rechts dargestellte Be- und Entladestellung, so kann unter Entspannung der vorgenannten Spiral- oder Wickelfeder der Fortsatz 15 wieder gegenüber der Längsachse der Aufnahme 7 abknicken. Während der gesamten vorgenannten Bewegung lag daher das freie Ende 19 des Riegelbolzens 11 dem Boden des Auslegers 5 an. Auf diesem Boden des Auslegers 5 können Vorsprünge vorgesehen sein, die durch ihre Formgebung begünstigen, dass beim Herausziehen der Aufnahme 7 der Fortsatz 15 und das freie Ende 19 des Riegelbolzens 11 über diese Anschläge hinweggleiten. Bei einer rückwärts gerichteten Bewegung, wie sie durch das Federelement 9 begünstigt wird, schlägt hingegen das freie Ende 19 des Riegelbolzens 11 gegen den erwähnten Anschlag und hält somit die Aufnahme 7 in der herausgezogenen und gegebenenfalls abgesenkten Stellung. Der Anschlag kann durch eine Erhebung gebildet sein, welche sich über den Boden des Auslegers 5 hinaus nach oben erhebt. Ein derartiger Riegelanschlag kann jedoch auch durch eine Ausnehmung im Boden des Auslegers 5 geschaffen werden, sodass sich der Riegelbolzen 11 mit seinem freien Ende 19 in diese Ausnehmung erstreckt. Bei einer weiteren Auszugsbewegung der Aufnahme 7 würde der Fortsatz 15 seiner schwenkbeweglichen Lagerung entsprechend angehoben, sodass der Riegelbolzen 11 aus der Ausnehmung heraus käme. Bei einer rückwärts gerichteten Einschubbewegung jedoch sperrt der Riegelbolzen 11 jedoch eine derartige Beweglichkeit und verriegelt vielmehr die Aufnahme 7 in ihrer eingenommenen Position.

An Stelle der vorgenannten Federbelastung kann auch vorgesehen sein, dass der Fortsatz 15 allein schwerkraftbedingt über den Boden des Auslegers 5 gezogen wird und ihm dabei anliegt, sodass allein aufgrund des Gewichtes dieses Fortsatzes 15 keine zusätzliche Vorspannung erforderlich ist, welche den Fortsatz 15 gegen den Boden des Auslegers 5 drückt.

Der Fortsatz 15 weist in seiner U-förmigen Profilierung eine Basisfläche auf, mit welcher das Führungsrohr 16 verbunden ist, sowie zwei seitliche Schenkel. Die beiden seitlichen Schenkel erstrecken sich weiter zum freien Ende des Fortsatzes 15 als die Basisfläche. Wenn der Riegelbolzen 11 gegen die Wirkung der Zugfeder 18 weiter gezogen werden kann als aus Fig. 2 ersichtlich, so kann er Vorsprünge freigeben, die als Riegelvorsprünge auf dem Boden des Auslegers 5 vorgesehen sind, und anschließend kann der Fortsatz 15 über diese Vorsprünge geführt werden, wobei er mit seinen beiden freien Enden der beiden seitlichen Schenkel neben einem derartigen Riegelvorsprung her auf der Bodenfläche des Auslegers 5 gleitet.

Wenn der Be- oder Entladevorgang abgeschlossen ist, kann der Benutzer am Handhebel 29 ziehen. Durch den Zug am Handhebel 29, der auf den Innenzug des Bowdenzugs 12 übertragen wird, wird der Riegelbolzen 11 mit seinem freien Ende nach oben verschoben, so dass es von der zugeordneten Riegelfläche des Auslegers 5 freikommt. Unterstützt durch das Federelement 9 wird nun der Ausleger 7 mitsamt dem ggf. darauf befindlichen Fahrrad angehoben, mit nur geringem Kraftaufwand für den Benutzer, und in seine aus Fig. 1 ersichtliche Lagerstellung verschwenkt bzw. geschoben.

Dabei ist das Fahrrad in der Aufnahme 7 durch eine Riegelzange 26 gesichert, deren beiden Riegel 31 sich um die Felge eines Laufrades legen, wenn das Fahrrad mit seinem Laufrad in die Aufnahme 7 eingeschoben wird. Zwei aus Fig. 1 nicht erkennbare Hebelarme dienen als Anschläge zur Betätigung der Riegelzange 26: Sie erstrecken sich von unten durch eine längliche Ausnehmung 34 nach oben in das Lichtraumprofil der Aufnahme 7. Sie werden durch das Laufrad nach unten gedrückt und dabei bewirkt jeder Anschlag die Schwenkbewegung jeweils eines Riegels der Riegelzange 26.

Gemäß Fig. 1 weist die Riegelzange 26 zwei Riegel 31 aus Rundstahl auf. Die Anschläge sind aus demselben Rundstahl gebildet, so daß jeweils ein Riegel 31 und ein Anschlag ein einteiliges Bauteil bilden, welches schwenkbeweglich gelagert ist.

Im Ausleger 5 sind ebenfalls Anschläge vorgesehen, welche in den Zeichnungen aus Übersichtlichkeitsgründen nicht dargestellt sind. Gegen diese Anschläge, die mit einem elastischen Puffermaterial ummantelt sein können, schlägt die obere Aufnahme 7 an, wenn sie in ihre Lagerstellung geführt und so weit wie möglich in den Ausleger 5 eingeschoben worden ist.

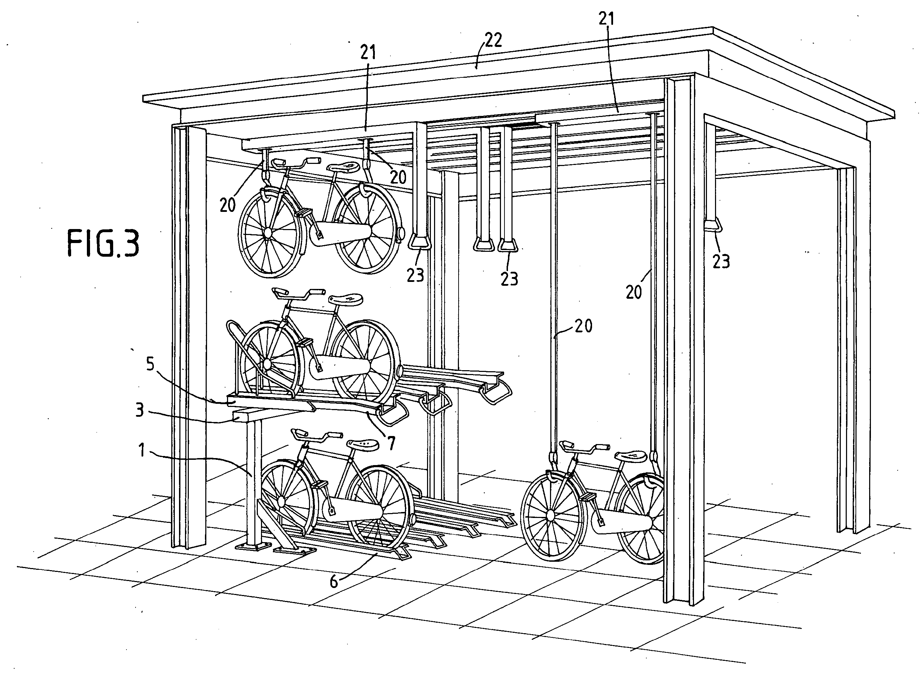

Aus Fig. 3 ist eine Einstellanlage ersichtlich, die dreistöckig ausgestaltet ist. Dabei ist für die unteren beiden Stockwerke die Einstellanlage ähnlich Fig. 1 ausgestaltet, mit einem Rahmen 1 sowie oberen und unteren Aufnahmen 6 und 7.

Die Aufnahmen für Fahrräder in der dritten Etage sind als Hängeaufnahmen 20 ausgestaltet. Diese befinden sich an einem Schlitten 21, der unter einer Decke 22 verfahrbar gelagert ist. Der Schlitten 21 wird mittels eines von der Decke 22 herabhängenden Griffs 23 bedient. Auf diese Weise kann der Schlitten 21 von einer Lagerstellung, in welcher er sich oberhalb des Rahmens 1 befindet, in eine Be- und Entladestellung verfahren werden, die in Fig. 3 weiter rechts dargestellt ist und in welcher die Fahrräder aus den Aufnahmen 20 entnommen werden bzw. mit den Aufnahmen 20 verbunden werden können.

Rein beispielhaft ist in Fig. 3 die Decke 22 als Teil einer Gerüstkonstruktion dargestellt. Es kann sich selbstverständlich abweichend von dem dargestellten Ausführungsbeispiel auch um eine bereits vorhandene Raumdecke eines Gebäudes handeln, die nachträglich mit den Schlitten 21 und den entsprechenden Führungen für die Schlitten 21 versehen wird.

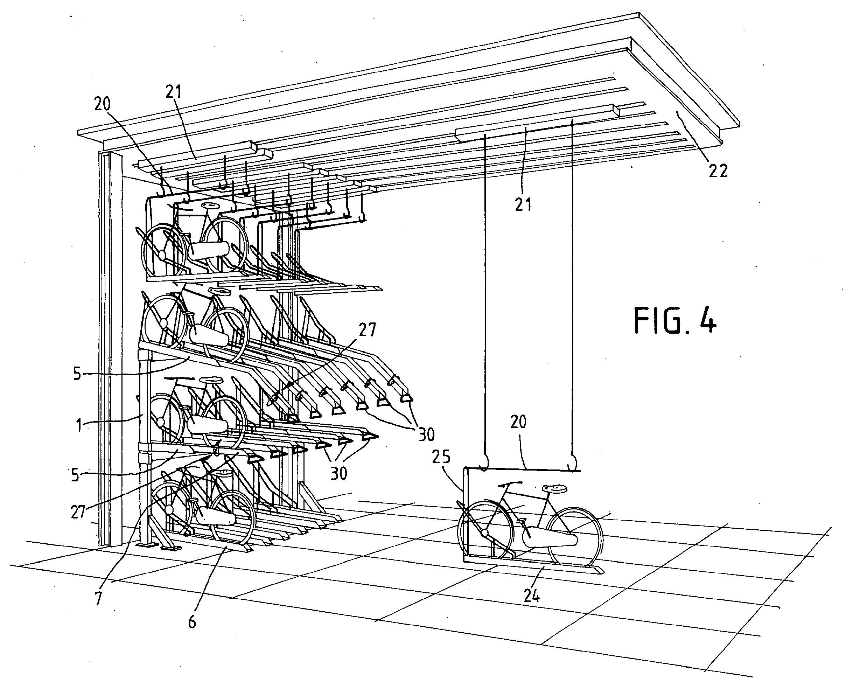

Fig. 4 zeigt ein weiteres Ausführungsbeispiel, bei welchem die Einstellanlage insgesamt vierstöckig ausgestaltet ist. Auch hier sind die obersten Aufnahmen als Hängeaufnahmen 20 ausgestaltet, die mittels Schlitten 21 an einer Decke 22 verfahrbar gelagert sind. Während in Fig. 3 die Aufnahmen 20 jedoch als jeweils zwei Haken ausgestaltet waren, in welche die beiden Laufräder eines Fahrrades eingehängt werden können, ist die Hängeaufnahme 20 gemäß Fig. 4 mit einer Schiene 24 ausgestattet, in welche das Fahrrad mit seinen beiden Laufrädern eingeschoben werden kann. Ein stirnseitiger Bügel 25 nimmt das Fahrrad kippsicher auf. Aufgrund der großen Höhe dieser in Fig. 4 dargestellten vierstöckigen Anlage erfolgt die Bedienung der Hängeaufnahmen 20 und der Schlitten 21 elektrisch mittels einer aus der Zeichnung nicht ersichtlichen Bedienungseinheit.

Die drei Etagen unterhalb dieser Hängeaufnahmen 20 sind gemäß Fig. 4 mit Aufnahmen 6, 7 und 27 ausgestattet, die an einem gemeinsamen Rahmen 1 montiert sind. Die Ausleger 5 der dritten Etage sind schräg nach unten ausgerichtet, sodass beim Ausziehen der in ihnen geführten obersten Aufnahmen 27 diese bereits allein durch das Herausziehen gleichzeitig auch tiefer zum Boden hin geführt werden. Aufgrund des großen Höhenunterschiedes zum Boden sind diese obersten Aufnahmen 27 teleskopierbar ausgestaltet, wobei das Fahrrad in dem Teil der Aufnahme 27 angeordnet ist, welcher dem Handgriff 30 am nächsten ist, sodass das Fahrrad beim Be- und Entladevorgang für den Benutzer optimal zugänglich ist. Zu diesem Zweck können beispielsweise die Aufnahmen 27 in Form zweier ineinander geführter V-förmiger oder U-förmiger Profilschienen ausgestaltet sein, insbesondere die Ausgestaltung als V-förmige Profilschienen ermöglicht es auf preisgünstige Weise gleiche Bauteile für die ineinander teleskopierbaren Elemente der Aufnahme 27 zu verwenden.

Wie bereits anhand der gesamten Beweglichkeit der Aufnahmen 7 beschrieben, können auch die Aufnahmen 27 federunterstützt in die Ausleger 5 hineingezogen werden. Zudem kann bei den teleskopierbaren Aufnahmen 27 vorgesehen sein, auch die Teleskopierbarkeit federunterstützt durchzuführen, sodass das Anheben des Fahrrades und damit das Ineinanderschieben der teleskopierbaren Teile der Aufnahme 27 erleichtert wird, ebenso wie das anschließende Einschieben der Aufnahme 27 in den zugehörigen Ausleger 5.

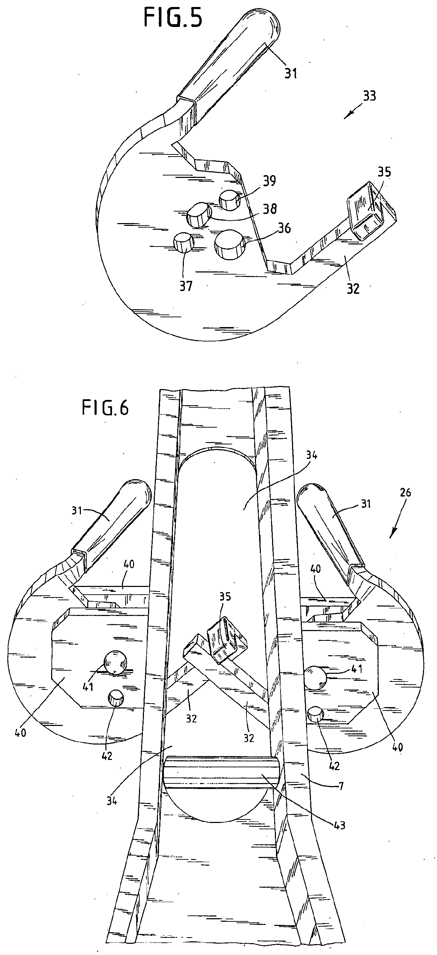

Alternativ zur Ausgestaltung gemäß der Fig. 1 kann die Riegelzange 26 gemäß den Fig. 5 und 6 nicht aus Rundstahl-Bauteilen gebildet sein, sondern aus plattenförmigen Bauteilen. Fig. 5 zeigt einen derartigen Blechzuschnitt, wobei aus Stabilitätsgründen die Blechstärke vorzugsweise wenigstens 5 mm beträgt und insbesondere ca. 10 mm betragen kann. Ein derartiger Blechzuschnitt stellt ein Bauteil 33 dar, welches einstückig einerseits den Riegel 31 ausbildet und andererseits einen Anschlag 32. Zwei nahezu gleichartige Bauteile 33 bilden gemeinsam die Riegelzange 26, wobei einer dieser beiden grundsätzlich gleichen Blechzuschnitte einen aus Fig. 5 ersichtlichen, zusätzlich angebrachten Mitnehmer 35 aufweist, dessen Funktion später noch erläutert werden wird.

Das Bauteil 33 weist gemäß Fig. 5 mehrere Bohrungen auf. Eine große Bohrung dient als Lagerungsbohrung 36 für die Halterung des Bauteils 33 in einem Schwenklager. Um die Lagerungsbohrung 36 herum angeordnet befinden sich drei weitere Bohrungen: Eine Sensorbohrung 37 ermöglicht es, sensorisch festzustellen, ob sich das Bauteil 33 in seiner Freigabe- oder in seiner Riegelstellung befindet. Der entsprechende Sensor kann auf verschiedne Weise ausgestaltet sein, rein beispielhaft berührungslos als Lichtschranke, induktiver oder kapazitiver Messaufnehmer, oder mechanisch als Taststift.

Zwei Sperrbohrungen 38 und 39 ermöglichen die Festlegung des Bauteils 33 in entweder seiner Riegelstellung oder seiner Freigabestellung. Die kleinere, kreisrunde Sperrbohrung 39 ermöglicht das Einführen eines entsprechenden Sperrstiftes, wenn sich das Bauteil 33 in seiner Freigabestellung befindet. Ist das Bauteil 33 hingegen in seine Riegelstellung verschwenkt, kann sich derselbe Sperrstift in die langlochartige Sperrbohrung 38 erstrecken. Abhängig von der Radgröße bzw. Felgenbreite kann der Riegel 31 geringfügig unterschiedliche Riegelstellungen einnehmen, und durch die langlochartige Ausgestaltung der Sperrbohrung 38 ist sichergestellt, dass sich in jeder dieser geringfügig unterschiedlichen Riegelstellungen der Sperrbolzen in die Sperrbohrung 38 erstrecken kann.

Während Fig. 5 den flachen Blechzuschnitt des Bauteils 33 darstellt, ist aus Fig. 6 eine Riegelzange 26 unter Verwendung zweier grundsätzlich gleicher (bis auf den Mitnehmer 35) Bauteile 33 ersichtlich. Dabei ist deutlich, dass die Riegel 31 aus der Ebene des Blechzuschnitt heraus abgewinkelt sind, so dass sich trotz großer Riegellänge eine breite Öffnung für das Einschieben des Laufrades zwischen den beiden Riegeln 31 ergibt.

Die beiden Bauteile 33 sind zwischen Haltelaschen 40 gelagert, wobei eine Schwenklagerachse 41 erkennbar ist. Unterhalb der Schwenklagerachse 41 befindet sich eine Bohrung 42 in der Haltelasche 40 zur Aufnahme des vorerwähnten Sensors, der mit der Sensorbohrung 37 zusammenwirkt und beispielsweise die in Fig. 6 dargestellt Freigabestellung der Riegelzange 26 registriert, da die Sensorbohrung 37 in dieser Schwenkstellung der Bauteile 33 mit der Haltelaschen-Bohrung 42 fluchtet.

Auf der in Fig. 6 weiter hinten, vom Betrachter abgewandt dargestellten Haltelasche 40 kann ein Sperrstift, motorisch angetrieben, vorgesehen sein, der sich wahlweise in die Sperrbohrungen 38 oder 39 erstreckt, je nach Schwenkstellung der Bauteile 33 und dementsprechend je nach Freigabe- oder Riegelstellung der Riegelzange 26.

Aus Fig. 6 ist ersichtlich, dass durch den Mitnehmer 35 das linke Bauteil 33 angehoben werden wird, wenn das rechte Bauteil 33 im Uhrzeigersinn verschwenkt wird und dementsprechend der Anschlag 32 angehoben wird und sich die Riegelzange 26 öffnet. Diese Bewegung erfolgt, wenn das Fahrrad aus der Aufnahme 7 entnommen wird, denn beim Anheben des entsprechenden Laufrades drückt dieses die beiden Riegen 31 nach oben.

Umgekehrt wird beim Einstellen eines Fahrrades in die Aufnahme 27 das Laufrad zunächst auf eine Rolle 43 geführt und von dieser gestützt. Es gerät anschließend auf die beiden Anschläge 32 und insbesondere in Kontakt mit dem linken Anschlag 32. Durch das Eigengewicht des Fahrrades wird dieser linke Anschlag 32 herabgedrückt und das entsprechend linke Bauteil 33 um seine Schwenklagerachse 41 im Uhrzeigersinn verschwenkt. Dabei bewegt sich der Riegel 31 dieses Bauteils 33 von der aus Fig. 6 ersichtlichen Freigabestellung in seine Riegelstellung und umgreift die Felge des Laufrades. Bei der Abwärtsbewegung des Laufrades und dementsprechend auch des linken Anschlags 32 nimmt der Mitnehmer 35 den rechten Anschlag 32 mit nach unten und bewirkt für das rechte Bauteil 33 ebenfalls eine Verschwenkung von der Freigabe in die Riegelstellung.

Der Bewegungsraum sowohl für die Anschläge 32 als auch für das Laufrad wird dadurch in vertikaler Bewegungsrichtung besonders groß, dass in der Aufnahme 7 die Ausnehmung 34 vorgesehen ist, durch die hindurch sich die Anschläge 32 bewegen könenn. Die Ausnehmung 34 ist als Langloch ausgestaltet, so dass das Laufrad tief in die Ausnehmung 34 eintauchen kann und die Anschläge 32 entsprechend weit bewegen kann. Da das Langloch eine Länge aufweist, die geringer ist als der Durchmesser der in dieser Aufnahme 7 einzustellenden Laufräder, ist zuverlässig sichergestellt, dass das Laufrad nicht unerwünscht tief - etwa bis zur Nabe - in die Ausnehmung 34 eintauchen kann, so dass Beschädigungen an z. B. dem Schaltwerk einer Kettenschaltung durch einen eventuellen Kontakt mit der Aufnahme 7 ausgeschlossen sind.

## Patentansprüche

1. Einstellanlage für leichte Zweiräder - wie Fahrräder, Motorroller oder Mopeds,
mit einer benutzerfernen Rückseite sowie einer dem Benutzer zugewandten Vorderseite,
mit einem Rahmen, an welchem in wenigstens zwei Etagen übereinander angeordnete Aufnahmen für die Zweiräder festgelegt sind,
wobei höher angeordnete Aufnahmen in einer Führung beweglich geführt und gegen die Wirkung einer Rückstellfeder absenkbar sind,
und mit einer von der Vorderseite aus lösbaren, ersten Verriegelung, welche in ihrer Riegelstellung die abgesenkte obere Aufnahme gegen die Federwirkung in ihrer abgesenkten Stellung hält,
**dadurch gekennzeichnet,**
**dass** diese erste Verriegelung einen schiebebeweglich gelagerten Riegelbolzen (11) aufweist, welcher aus einer Riegelstellung gegen die Wirkung einer Riegelfeder in eine Freigabestellung verschiebbar ist,
wobei der Riegelbolzen (11) schräg zur Längsachse der oberen Aufnahme (7, 27) ausgerichtet ist und sich bei abgesenkter Aufnahme zur Führung (Ausleger 5) erstreckt, und in seiner Riegelstellung mit einem Riegelanschlag der Führung zusammenwirkt,
und **daß** eine zweite Verriegelung in Form einer sogenannten Riegelzange (26) zur Festlegung eines Zweirades in einer Aufnahme (6, 7, 27) vorgesehen ist,
wobei die Riegelzange (26) zwei Riegel (31) aufweist, welche zwischen einer ein Laufrad des Zweirades freigebenden Freigabestellung und einer das Laufrad in der Aufnahme (6, 7, 27) festlegenden Riegelstellung beweglich sind, in welcher sie die Felge des Laufrades in ihrer Riegelstellung hintergreifen.

2. Einstellanlage nach Anspruch 1, **dadurch gekennzeichnet, dass** der Riegelbolzen (11) in einem Führungsrohr (16) beweglich gelagert ist.

3. Einstellanlage nach Anspruch 1 oder 2, **dadurch gekennzeichnet, dass** der Riegelanschlag durch eine Ausnehmung in der Führung gebildet ist.

4. Einstellanlage nach Anspruch 3, **dadurch gekennzeichnet, dass** der Riegelbolzen (11) mittels eines Bowdenzugs (12) beweglich ist, welcher mittels eines Handhebels (29) bedienbar ist.

5. Einstellanlage nach einem der vorhergehenden Ansprüche,
**dadurch gekennzeichnet,**
**dass** die oberen Aufnahmen (27) teleskopierbar sind, derart, dass sie in ihrer abgesenkten Stellung jeweils mit ihrem vorderen Ende näher zum Boden verlängerbar sind,
wobei die Aufnahmen (27) in der zusammengeschobenen Stellung ein Zweirad aufnehmend bemessen sind.

6. Einstellanlage nach einem der vorhergehenden Ansprüche,
**dadurch gekennzeichnet,**
**dass** die Aufnahmen (6,7,27) in drei Etagen übereinander angeordnet sind.

7. Einstellanlage nach einem der vorhergehenden Ansprüche,
**dadurch gekennzeichnet,**
**dass** oberhalb der am Rahmen (1) festgelegten Aufnahmen (6,7,27) zusätzliche Aufnahmen (20) vorgesehen sind, welche an einer als zweiter Rahmen oder als Raumdecke ausgebildeten Halterung befestigt sind.

8. Einstellanlage nach Anspruch 7, **dadurch gekennzeichnet, dass** die zusätzlichen Aufnahmen (20) als Hängeaufnahmen ausgebildet sind, derart, dass sie zwischen ihrer Halterung und dem Boden anhebbar und absenkbar sind.

9. Einstellanlage nach Anspruch 7 oder 8, **dadurch gekennzeichnet, dass** die zusätzlichen Aufnahmen (20) in ihrer Halterung verschiebbar gelagert sind, derart, dass sie von einer über den anderen Aufnahmen (6,7,27) befindlichen Lagerposition in eine zu den anderen Aufnahmen (6,7,27) versetzten Be- und Entladeposition verschiebbar sind.

10. Einstellanlage nach Anspruch 1, **dadurch gekennzeichnet, dass** die Riegelzange (26) einen beweglich gelagerten Anschlag (32) zur Anlage am Laufrad des Zweirades aufweist, der in den Bewegungsraum des in die Aufnahme (6, 7, 27) eingeschobenen Zweirades ragt, wobei der Riegel (31) mit dem Anschlag (32) verbunden ist und synchron mit der Bewegung des Anschlages beweglich ist.

11. Einstellanlage nach Anspruch 10, **dadurch gekennzeichnet, daß** der Anschlag (32) und der Riegel (31) als einstückiges, schwenkbar gelagertes Bauteil (33) ausgebildet sind.

12. Einstellanlage nach Anspruch 10, **dadurch gekennzeichnet, daß** der Anschlag (32) unterhalb des Laufrades vorgesehen ist und bei Belastung durch das Laufrad den Riegel (31) in seine Riegelstellung führend gelagert ist.

13. Einstellanlage nach Anspruch 10, **dadurch gekennzeichnet, daß** in der Aufnahme (6, 7, 27) eine Ausnehmung (34) unterhalb der Laufbahn des Laufrades vorgesehen ist, wobei sich der Anschlag (32) in die Ausnehmung (34) erstreckt.

14. Einstellanlage nach einem der Ansprüche 1 bis 9, **dadurch gekennzeichnet, dass** die Riegelzange (26) mittels eigener Antriebsmittel - wie mittels eines Elektromotors - beweglich ist.

15. Einstellanlage nach einem der vorhergehenden Ansprüche, **dadurch gekennzeichnet, dass** die Riegelzange (26) mittels eines Sperrelementes in ihrer Riegelstellung arretierbar ist.
